Europäisches Patentamt

European Patent Office

Office européen des brevets

(19)

(11) Publication number: **0 183 497**
**A1**

(12) # EUROPEAN PATENT APPLICATION

(21) Application number: **85308522.3**

(22) Date of filing: **25.11.85**

(51) Int. Cl.⁴: **C 09 B 9/04**

(30) Priority: **27.11.84 GB 8429942**
**26.02.85 GB 8504913**

(43) Date of publication of application:
**04.06.86 Bulletin 86/23**

(84) Designated Contracting States:
**DE FR GB IT**

(71) Applicant: **Vila, Roger François**
**The Old Forge Seaton Lane**
**Seaham Co. Durham, SR7 OLS(GB)**

(72) Inventor: **Vila, Roger François**
**The Old Forge Seaton Lane**
**Seaham Co. Durham, SR7 OLS(GB)**

(74) Representative: **Virr, Dennis Austin**
**URQUHART-DYKES & LORD New Exchange Buildings**
**Queen's Square**
**Middlesbrough, TS2 1AB(GB)**

(54) **Driving simulator.**

(57) A vehicle driving simulator comprises a video player (1), a display unit (2) for presenting visually the output of the video player, a plurality of vehicle controls (10 to 15) and means (8) for comparing the user's operation of the controls with a predetermined standard operation and for varying the lateral position or speed of presentation of the visual display in response to the result of that comparison. The video display may have been recorded during a drive by an experienced driver and the standard operation may be that of the experienced driver during that drive.

EP 0 183 497 A1

Croydon Printing Company Ltd

FIG. 3

# DRIVING SIMULATOR

The invention is a driving simulator, by means of which an inexperienced driver may learn to drive, or to drive better, a vehicle, especially a road vehicle. For convenience, the user will hereinafter be referred to as a "learner" driver but it will readily be apparent that the simulator is suitable for enhancing the driving standard of drivers of greater experience.

Control simulators are already used to teach trainees in a range of different fields, especially where learning on the machine itself is either costly or hazardous. Thus such simulators may be used to train aircraft pilots or ships' captains. However simulators of this type are themselves relatively expensive and therefore little suited to the training of users of road vehicles.

For example, such conventional simulators may rely upon computer generation of a 3-D model and its display using high quality graphics to provide a simulated visual presentation of the operator's surroundings. Simulation in this way is, however, too expensive to permit its ready adoption for the training of road vehicle drivers.

Such simulators as have been proposed hitherto for road vehicles are either complex and expensive (as for example that disclosed in UK patent application no. 2120495A) or little more than fairground toys, computer games or crude simulators having little real relevance to true driving conditions. It is therefore an object of the present invention to provide a novel form of vehicle driving simulator, especially a simulator for road vehicles, which makes possible a high level of authentic simulation at a reasonable cost.

The vehicle driving simulator according to the present invention comprises a video player, a display unit for presenting visually the output of the video player, a plurality of vehicle controls and means for comparing the user's operation of said vehicle controls with a predetermined standard operation and for varying the lateral position or speed of presentation of the visual display in response to the result of that comparison.

Using the driving simulator of the present invention, it is possible to pre-record the visual display of the driving of an actual vehicle by a more experienced driver (hereinafter referred to as the "expert" driver) along a given traffic path and then to vary the display as presented in direct response to a comparison of the learner's operation of the simulator with the expert's driving of the vehicle.

The video recording, prepared from within or upon the vehicle while the expert driver is driving it, may be upon video tape or video disc. From the quality standpoint, the use of a disc recording is preferred.

The number of vehicle controls provided may be selected as desired, depending upon the nature of the vehicle (for example lorry, manually-driven car, "automatic" car or motorcycle), the particular object of the learning operation and the degree of complexity which financial considerations dictate in a given situation. Thus, for example, for basic learning in the case of a manually-driven car or lorry, the controls would normally include, as a minimum, accelerator, brake and clutch pedals, gear lever, handbrake and steering wheel. In the case of a motorcycle or similar two-wheeled vehicle, the minimum controls may advantageously comprise accelerator, brake and gear-change controls and handlebars.

While the above may be the preferred minimum controls in the case of the examples given, it is advantageous to provide further controls corresponding to further features of normal driving. Thus, for all types of road vehicle, it is preferred to provide turn indicators and one or more rear-view mirrors. For a two-wheeled vehicle, preferably the vehicle is so mounted as to allow the rider to balance his vehicle as in normal driving, a notional angle of lean then being computed from the position of the handlebars and the rider's computed velocity and compared with that of the expert for training purposes. For example, the visual display may be rotated through an angle derived from the difference between learner and expert angles, as an indication of the discrepancy to the user.

The result of the comparison of the operation of the vehicle controls with the standard operation is used to vary the speed of presentation of the visual display or its lateral position as appropriate. For example the learner driver's notional speed, as determined by his use of the accelerator pedal and (in the case of a manually-driven car) the clutch and gear lever, may be compared with the actual road speed of the expert driver at that point of the display and the resulting ratio will determine directly the speed of presentation of the display. In a similar manner, the arithmetical difference between the learner's lateral road position and that of the expert, as determined by their respective operation of the steering wheel or handlebars, may be calculated and then any resulting difference may be presented as a lateral displacement of the image on the display screen.

Preferably, other indications of the effects of the learner's operation of the controls are provided. Thus, for example, conventional dashboard indicators such as speed gauge, revolution counter and/or warning lights, including lights indicating operation of the turning indicator or warning "seat belt unfastened" or "handbrake on", may be included in the display.

In one form of the invention, means are provided to monitor use of the rear-view mirror or mirrors. Such means may take the form of a transmitter of a visible light or infra-red signal associated with the head of the driver, together with detectors such as signal responsive cells associated with the mirrors. Such a transmitter may be mounted on headphones to be worn by the driver as described hereinafter.

The driving simulator of the present invention may be further improved by incorporating therein means for playing oral instructions. Thus, by using a stereo form of video player, it becomes possible to reserve one channel specifically for conveying to the learner the expert control instructions appropriate to the point arrived at, or approached, in the simulated journey.

Interaction between the components of the driving simulator, including selection of the particular operation to be monitored at a given time and also the calculation of the relationships between the values of the many variables, may conveniently be controlled by a microcomputer.

In one form of the invention, additional displays representing the views to the sides of the vehicle are presented on one or more additional screens.

It can be seen that many of the components essential to the driving simulator of the present invention, or optionally incorporated therein, are readily available and indeed may already be possessed by the user. It therefore becomes possible to design and offer to the user a minimum-cost kit of components, instructions and software by means of which he can assemble a personal simulator. In other forms, the simulator according to the present invention may be designed for use upon the premises of a driving school or by an individual instructor, thus making simulated vehicle driving generally available to the learner driver and allowing instruction to continue to operate even in severely adverse weather conditions.

The invention will now be further described with reference to the accompanying drawings which illustrate by way of example one preferred embodiment of the driving simulator according to the present invention and wherein:

Fig. 1 illustrates in simplified form the visual display seen by the user when the notional vehicle is correctly steered;

Fig. 2 is a display corresponding to Fig. 1 as seen when the notional vehicle is mis-steered towards the left; and

Fig. 3 illustrates schematically the components of the exemplified driving simulator and their interrelationship.

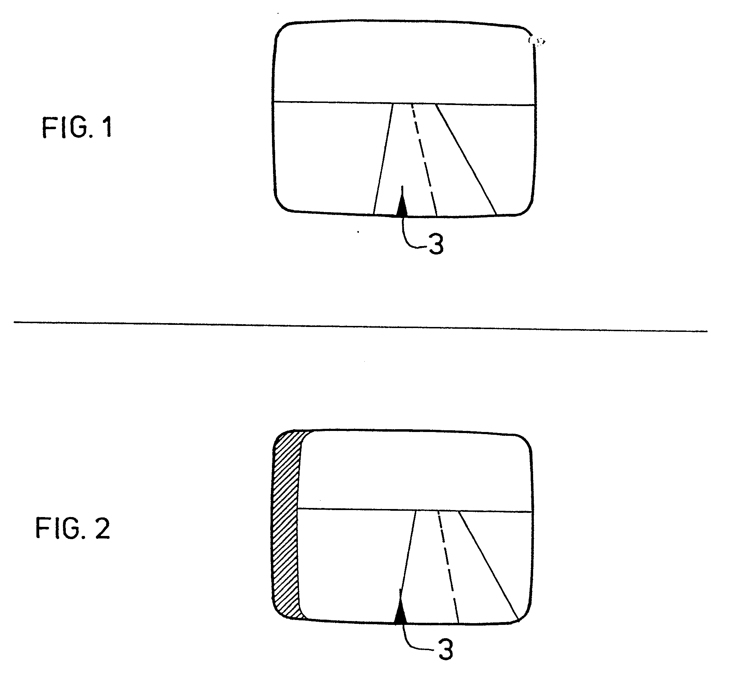

Referring firstly to Figs. 1 and 2, the pointer 3 is fixed relative to the screen proper and the position of the visual display upon the screen is varied laterally in response to the user's operation of the steering wheel. In Fig. 1, the display is that as previously recorded by an "expert" driver and because the learner driver is steering properly, the image is presented in register with the outline of the screen. In Fig.2, the user has turned the steering wheel unduly far to the left and, to illustrate the effect of this mis-steering to the user, the display is displaced to the right of the screen so that the pointer 3, which represents the position of the notional vehicle on the road, shows the vehicle by the left-hand verge of the road.

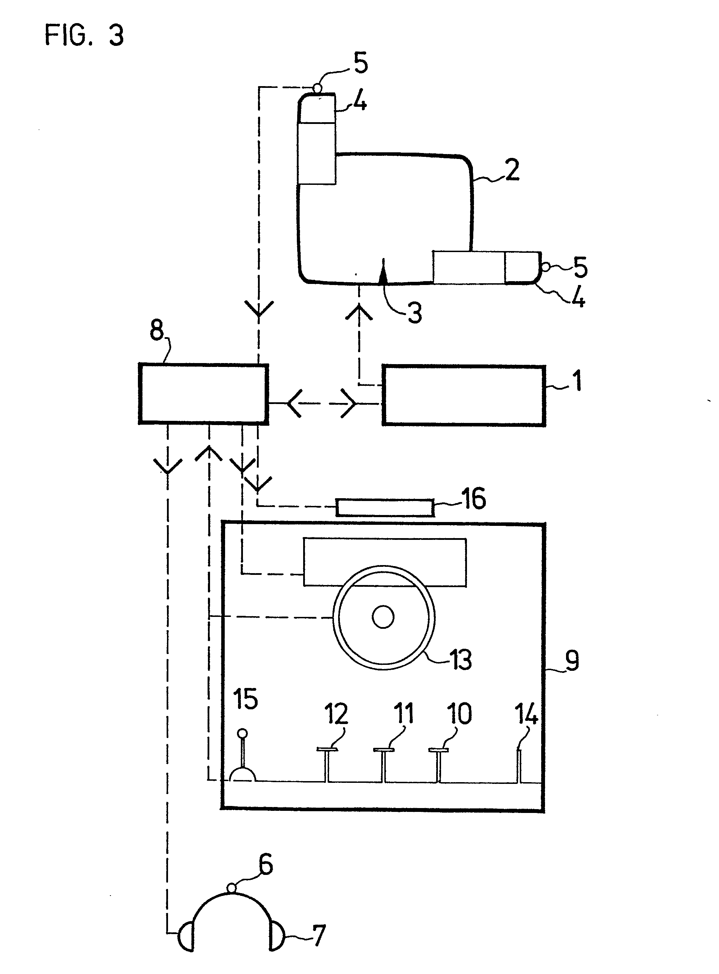

Referring now to Fig. 3 of the drawings, the simulator comprises a conventional stereo videodisc playback machine 1 having a computer interface which controls the playback speed, and a television monitor 2 (or television projector and screen), modified to permit electrical or electronic lateral displacement of the displayed image. The speed and position of the display are controlled by a microprocessor 8 in response to instructions generated in the simulator cab 9.

The cab 9 corresponds to a normal vehicle cab, either of a general type or corresponding specifically with a given make of vehicle which the user is to learn to drive. It includes a normal driving seat and also the illustrated controls of accelerator pedal 10, footbrake pedal 11, clutch pedal 12, steering wheel 13, handbrake lever 14 and gear lever 15. Rheostats or similar units giving an output continuously variable in response to the operation of the controls are fitted to the pedals 10 to 12 and to the steering wheel 13 and handbrake 14. Position-detecting switches are fitted to the gear lever 15 and also to a turning indicator control and to the buckle of a seat belt provided for wearing by the user. An instrument panel with a set of apparently conventional instruments, sited above and behind the steering wheel 13, gives a display of notional road speed and engine revolutions, calculated by the microprocessor 8 from data provided from the accelerator pedal 10, clutch pedal 12 and gear lever 15.

Additional information, for example warning of "handbrake on" or "fasten seat belt", may be presented on a screen 16.

Within the visual display on the screen 2 are included inserted displays representing the views visible in an in-car rear-view mirror and in a wing mirror respectively. Periscopes 4, 4 are provided to display these views in their correct positions relative to the main picture as seen on the screen 2.

The user of the simulator wears headphones 7 and through these he is able to receive audible instructions to assist his learning, these instructions having been recorded on one of the soundtracks of the stereo disc. Mounted upon the headphones 7 is an infra-red signaller 6 and upon the periscopes 4 are photocells 5. These photocells are activated when the user turns his head to check the rear view or wing mirror display, thus confirming that these actions have been taken when road circumstances or the learner driver's operating of the controls requires them.

The headphones may be used for the further purpose of providing sounds indicative of ambient conditions or of noises notionally generated by the engine, gears or tyres in response to operation of the various controls.

As can be readily appreciated, the driving simulator according to the present invention, for example the embodiment illustrated in the drawings and described with reference thereto, affords a high degree of realism and an authentic visual display, while being capable of manufacture much more cheaply than any of the complex conventional simulators dependent upon computer generation of graphic simulation of the user's surroundings.

## CLAIMS

1. A vehicle driving simulator comprising a video player, a display unit for presenting visually the output of the video player, a plurality of vehicle controls and means for comparing the user's operation of said controls with a predetermined standard operation and for varying the lateral position or speed of presentation of the visual display in response to the result of that comparison.

2. A vehicle driving simulator according to claim 1, wherein the controls include accelerator, brake and clutch pedals, a gear lever, a handbrake and a steering wheel.

3. A vehicle driving simulator according to claim 1, wherein the controls include motor-cycle accelerator, brake and gear-change controls and handlebars.

4. A vehicle driving simulator according to claim 3, incorporating means to calculate a notional angle of lean of the vehicle and to modify the orientation of the visual display in response thereto.

5.   A vehicle driving simulator according to any of the preceding claims, having also one or more displays representing the view in a rear-view mirror.

6.   A vehicle driving simulator according to claim 5, having means to detect when the user looks towards the rear-view display.

7.   A vehicle driving  simulator according to claim 6, wherein said detection means comprises a signal transmitter for mounting on the head of the user and a signal-responsive cell on each rear-view mirror.

8.   A vehicle driving simulator as claimed in any of the preceding claims, wherein the video player is a stereo player and including headphones to reproduce sounds from a soundtrack of a disc or tape within the player.

9.   A vehicle driving simulator according to any of the preceding claims, wherein the predetermined standard operation of the controls are those operations of a skilled driver as carried out during the recording of the visual display to be presented on the display unit.

- 12 -                                    0183497

10.   A vehicle driving simulator according to any of
the preceding claims, wherein the display unit is a
television screen.

11.   A vehicle driving simulator according to any,
of the preceding claims, wherein the means for comparing
the user's operation of the controls with a predetermined
standard operation and for presenting the result to the
display unit is a microprocessor.

FIG. 1

3

FIG. 2

3

FIG. 3

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| X | DE-A-3 107 311 (Y. RIEDL et al.) <br> * Pages 6,10,11; figure * | 1,8 | G 09 B 9/04 |
| A | | 9,10 | |
| | --- | | |
| A | DE-A-3 021 061 (R. FOERST) <br> * Page 1, lines 1-14; page 2, lines 1-21; page 6, lines 7-9 * | 1-3,8 | |
| | --- | | |
| A | GB-A-2 115 946 (REDIFON SIMULATION LTD.) <br> * Page 1, lines 1-11; page 3, lines 41-54; page 8, lines 23-31; figure 1 * | 1,4,6, 7,11 | |
| | --- | | TECHNICAL FIELDS SEARCHED (Int Cl 4) |
| A | DE-A-2 235 932 (AGENCY OF INDUSTRIAL SCIENCE AND TECHNOLOGY TOKYO) <br> * Page 40, paragraph 2; figure 20 * | 5 | G 09 B |
| | --- | | |
| A | GB-A-2 128 842 (LONDON UNIVERSITY) <br> * Page 2, lines 24-55; figure 4 * | 4,5 | |
| | ----- | | |

The present search report has been drawn up for all claims

| Place of search | Date of completion of the search | Examiner |
|---|---|---|
| THE HAGUE | 10-02-1986 | ODGERS M.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82